# EUROPÄISCHE PATENTSCHRIFT

(11) **EP 0 467 138 B1**
(45) Veröffentlichungstag und Bekanntmachung des Hinweises auf die Patenterteilung: **05.01.1994**
(21) Anmeldenummer: 91110823.1
(22) Anmeldetag: 29.06.1991
(51) Int. Cl.: B60C 11/08

(54) **Fahrzeugreifen mit Quernuten**
Vehicle tyre with transversal grooves
Bandage de véhicule ayant des rainures transversales

(30) Priorität: 16.07.1990 DE 4022615
(43) Veröffentlichungstag der Anmeldung: 22.01.1992
(73) Patentinhaber: Continental Aktiengesellschaft, 30165 Hannover (DE)
(72) Erfinder: Seitz, Hans, Dr., W-3012 Langenhagen (DE); Trabandt, Hagen, W-3163 Sehnde 1 (DE)

(56) Entgegenhaltungen:
- EP-A- 0 357 462
- DE-A- 3 218 219
- DE-A- 3 425 410

## Beschreibung

Die Erfindung bezieht sich auf einen profilierten Fahrzeugreifen gemäß dem Oberbegriff des Anspruches.

An solchen Fahrzeugreifen sind die Flanken von Nuten gegenüber der Radialen in der Weise schräg gestellt, daß sich die Nuten nach radial außen hin erweitern. Durch eine solche Ausbildung soll insbesondere der Steinauswurf bzw. die Selbstreinigung des Profiles begünstigt werden. Der Flankenneigungswinkel beträgt üblicherweise etwa 5° bis 30°. Diese Flankenschrägstellung erleichtert überdies die Entformung der Fahrzeugreifen aus den Vulkanisierpressen. Bislang wurde die Flankenneigung so klein wie möglich und so groß wie angesichts der Einsatzbedingungen und der jeweiligen Laufflächenmischung nötig bemessen. Die solchermaßen bestimmte Flankenneigung wurde bisweilen über der Axialerstreckung variiert jedoch keinesfalls über der Erstreckung in Umfangsrichtung.

Diese bekannten Reifen weisen den Nachteil auf, daß ihre Rutschfestigkeit über dem Umfang schwankt. Es kommt dadurch zu Ungleichmäßigkeiten bei Längs- und bei Querbeschleunigungen.

Wegen gestiegener Anforderungen an den Geräuschkomfort ist die Verwendung einer die Anregungsfrequenz streuenden Profilschrittfolge bei modernen Fahrzeugluftreifen unvermeidlich, egal ob es sich um PKW- oder um LKW-Reifen handelt. Um so bedauerlicher ist der an demgemäß konstruierten Reifen zu beobachtende Effekt, daß sich die Wirksamkeit der Profilschrittfolgen über der Laufleistung verschlechtert. Dabei nimmt die Amplitude der niederfrequenten Schwingungen, das heißt der Schwingungen unterhalb der sogenannten Klotzharmonischen, gegenüber den höherfrequenten Schwingungen zu. Die Klotzharmonische ist das Produkt aus der Drehfrequenz des Rades (abhängig im wesentlichen von Fahrgeschwindigkeit und Abrollumfang) mal der Anzahl der Profilklötze in Umfangsrichtung.

Die Erfindung bezieht sich insbesondere auf grobstollige Reifen für LKW und Geländefahrzeuge, wo beide erwähnten Probleme, insbesondere der ungleichmäßige Griff, besonders stören.

Aufgabe der Erfindung ist es, unter Beibehaltung resonanzstreuender Profilschrittfolgen für die Fahrzeugreifenprofilierung die genannten Nachteile zu mildern.

Die Aufgabe wird erfindungsgemäß durch die kennzeichnenden Merkmale des Anspruches gelöst. In der knapperen Reifenfachsprache läßt sich die Lehre auch so ausdrücken, daß auch die Flankenneigung der Quernuten der Modulation der verwendeten Profilschrittfolge unterliegen; genauer gesagt, soll der Tangens des Flankenneigungswinkels α entsprechend der Profilschrittfolge für den Abstand und die Erstreckung der Nuten mitmoduliert sein.

Die Erfindung gewährleistet, daß die über dem Umfang gleichmäßige Positiv/Negativ-Verteilung auch nach Eintritt von Abrieb erhalten bleibt. Es stellte sich überdies heraus, daß mit der Erfindung das allmähliche Anwachsen der niederfrequenten Anregungen über der Gebrauchsdauer eingedämmt wird. Die Erfinder erklären sich dies damit, daß die bisher sich über der Gebrauchsdauer einstellende Verungleichmäßigung des Positiv/Negativ-Verhältnisses zu einer allmählichen Unwucht des Reifens führte. In Bereichen großer Profilklötze war nicht nur der spezifische Abrieb höher - was durch die Erfindung für sich betrachtet nicht geändert wird - sondern gleichzeitig auch der durch Verschleiß bedingte Negativverlust kleiner. Durch Erhöhung des Negativverlustes über der Laufdauer - das heißt durch eine absolut stärkere Abnahme des Negativvolumens über der Gebrauchsdauer - zwischen großen Profilklötzen wird dieser Effekt eingedämmt. Überdies werden abriebbedingte Verzerrungen der für die Peripherie entworfenen Profilschrittfolgen unterbunden.

Die Erfindung wird nachfolgend anhand zweier Figuren näher erläutert. Es zeigt:
- Fig. 1: einen Fahrzeugreifen in Draufsicht und
- Fig. 2: denselben Fahrzeugreifen aufgeschnitten in der Längsrichtung.

Beide Figuren beschränken sich auf eine ausschnittsweise Wiedergabe eines erfindungsgemäßen Fahrzeugreifens.

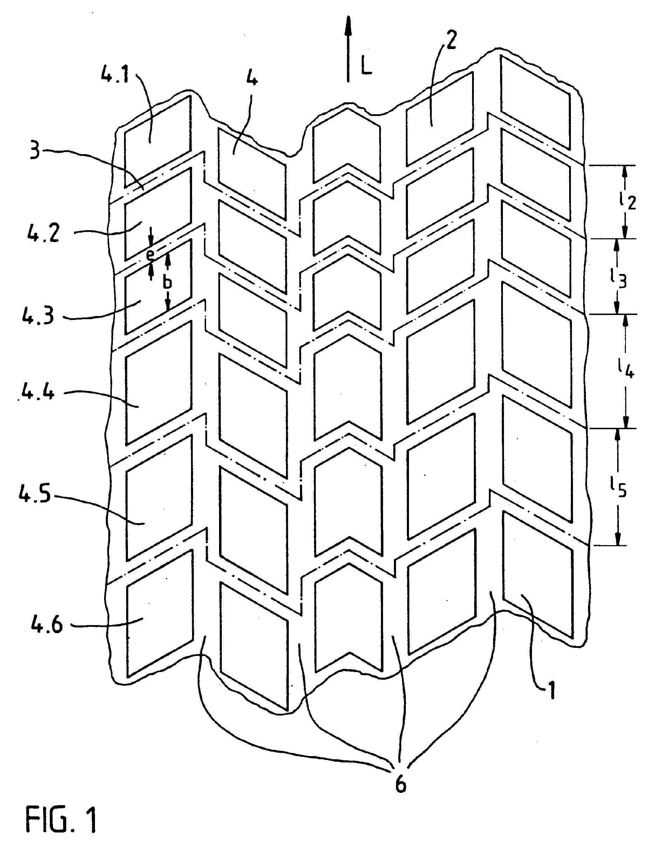

Die Fig. 1 zeigt in Draufsicht die Lauffläche 2 eines Fahrzeugreifens 1 mit Nuten 3, die schräg zur Laufrichtung L verlaufen. Im Gegensatz zu den in der Laufrichtung verlaufenden Nuten 6, nachfolgend Umfangsnuten 6 genannt, werden die hier in Rede stehenden Nuten 3 nachfolgend als Quernuten 3 bezeichnet. Die Quernuten können, müssen aber nicht im 90°-Winkel zur Laufrichtung L ausgerichtet sein. In diesem Beispiel verlaufen sie etwa in einem Winkel von 60° zur Laufrichtung L. In dem gezeigten Beispiel sind die Profilschrittgrenzen durch die Quernuten 3 gelegt.

Im oberen Bildbereich sind in einer Klotzreihe drei kurze Profilblöcke 4.1, 4.2 und 4.3 gezeigt, im unteren Bildbereich drei lange Profilblöcke 4.4, 4.5 und 4.6. Das Längenverhältnis zwischen den gezeigten kürzesten und den längsten Profilschritten, z.B. l₄/l₃, beträgt in diesem Beispiel 1,6. Der Negativanteil, der erfindungsgemäß in jedem Profilschritt unabhängig von seiner Länge gleich ist, beträgt 30 %. Die Klotzreihen 4 sind in diesem Beispiel - ohne daß dies für die Erfindung erheblich wäre - durch gerade Umfangsrillen 6 voneinander getrennt.

Die Erstreckung der Quernuten 3 in Laufrichtung ist mit dem Symbol e gekennzeichnet. Wesentlich ist, daß die Nutenerstreckung e in konstantem Verhältnis zur Klotzerstreckung b - jeweils in Umfangsrichtung - steht. Zwischen kleinen Klötzen befinden sich also schmale Rillen und zwischen großen Klötzen, wie im unteren Bildabschnitt, befinden sich breite Rillen. Durch die Erfindung gilt erstmalig die Konstanz des besagten Verhältnisses nicht nur für den peripheren Umfang, sondern für jeden Umfang, der sich durch Abrieb einstellt.

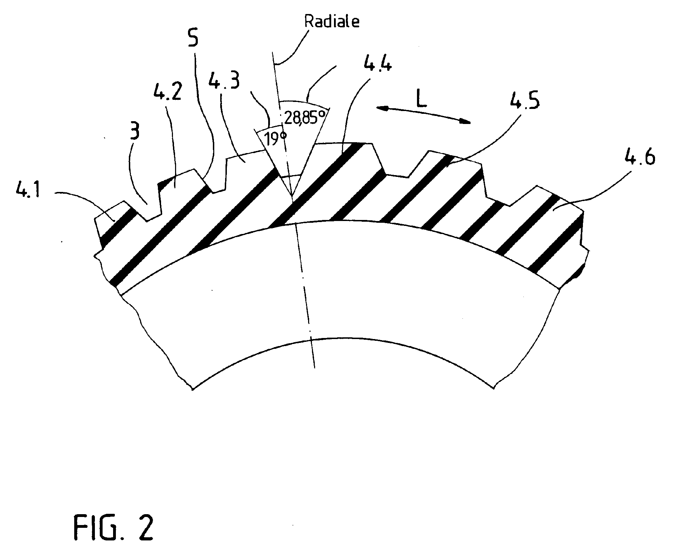

Dies zeigt insbesondere die Figur 2. Sie zeigt den gleichen Reifenbereich wie die Fig. 1 jedoch in einem Schnitt in der Laufrichtung L. Zu sehen sind hier insbesondere die in einem jeweiligen Winkel α geneigten Flanken 5 der Quernuten 3. Wie gezeigt, öffnen sich die zwischen großen Profilklötzen befindenden Quernuten nach radial außen hin weiter als die zwischen kleinen Klötzen befindlichen Quernuten. Zwischen den kurzen Blöcken 4.1, 4.2 und 4.3 sind die Flanken 5 in diesem Beispiel gegenüber der Radialen um 19° geneigt, während die Flanken 5 zwischen den langen Blöcken 4.4, 4.5 und 4.6 um 28,85° geneigt sind.

Die Erfindung ermöglicht ohne Kostenerhöhung ein verbessertes Reifenhandling auf nasser beziehungsweise glitschiger Fahrbahn und reduziert die Frequenzgangänderung über zunehmender Laufleistung.

## Patentansprüche

1. Profilierter Fahrzeugreifen (1) mit Nuten (3) in der Lauffläche (2), die in der Draufsicht schräg zur Laufrichtung (L) verlaufen und deren Flanken (5) gegenüber der Radialen um einen Böschungswinkel α geneigt sind,
- wobei die Lauffläche (2) in eine Vielzahl (n) von in der Umfangsrichtung aufeinanderfolgenden Profilschritten (µ) (=pitches) unterteilt ist, wobei mindestens zwei aufeinander folgende Profilschritte (µ, µ+1) verschieden lang sind, wobei die Folge der zumindest teilweise verschiedenen Längen (l_{µ}) der Profilschritte (µ) nachfolgend als Profilschrittlängenfolge (l₁, l_{2,} ... l_{µ}, ... lₙ) (=pitchsequence) bezeichnet wird,
- wobei gemäß dieser Profilschrittlängenfolge die innerhalb eines jeden Profilschrittes (µ) zu messenden Positiv-Erstreckungen (b_{µ}) in Laufrichtung (L) über dem Umfang schwanken, das heißt, daß für alle Profilschritte (µ) das Verhältnis (b_{µ}/l_{µ}) der Positiv-Erstreckungen (b_{µ}) zur Profilschrittlänge (l_{µ}) gleich ist,
- wobei gemäß dieser Profilschrittlängenfolge die innerhalb eines jeden Profilschrittes (µ) zu messenden Erstreckungen (e_{µ}) der Nuten (3) in Laufrichtung (L) über dem Umfang schwanken, das heißt, daß für alle Profilschritte (µ) das Verhältnis (e_{µ}/l_{µ}) der Nuten-Erstreckungen (e_{µ}) zur Profilschrittlänge (l_{µ}) gleich ist,
**dadurch gekennzeichnet,** daß
- auch die innerhalb eines jeden Profilschrittes (µ) zu messenden Böschungswinkel α über dem Umfang schwanken und zwar ebenfalls gemäß dieser Profilschrittlängenfolge, das heißt, daß für alle Profilschritte (µ) das Verhältnis (tan α_{µ}/l_{µ}) des Tangens der Böschungswinkel (α_{µ}) zur Profilschrittlänge (l_{µ}) gleich ist.

## Claims

1. Profiled vehicle tyre (1) having grooves (3) in the tread surface (2), which grooves extend inclinedly relative to the direction of travel (L) when viewed from above, and the walls (5) of said grooves are inclined through an angle of inclination α relative to the radial,
- the tread surface (2) being divided into a plurality (n) of profile steps (µ) (= pitches), which succeed one another in the circumferential direction, at least two successive profile steps (µ, µ+1) having different lengths, the sequence of the lengths (1_{µ}) of the profile steps (µ), at least some of which are different, being called profile step length sequence (1₁, 1_{2,}...l_{µ}, ... lₙ) (= pitch sequence) hereinafter;
- the positive extensions (b_{µ}), which are to be measured internally of each profile step (µ), in accordance with this profile step length sequence, varying over the circumference when viewed with respect to the direction of travel (L), that is to say that the ratio (b_{µ}:l_{µ}) of the positive extensions (b_{µ}) relative to the profile step length (l_{µ}) is identical for all of the profile steps (µ);
- the extensions (e_{µ}) of the grooves (3), which extensions are to be measured internally of each profile step (µ), in accordance with this profile step length sequence, varying over the circumference when viewed with respect to the direction of travel (L), that is to say that the ratio (e_{µ}:l_{µ}) of the groove extensions (e_{µ}) relative to the profile step length (l_{µ}) is identical for all of the profile steps (µ);
characterised in that
- the angles of inclination α, which are to be measured internally of each profile step (µ), also vary over the circumference, such likewise being in accordance with this profile step length sequence, that is to say that the ratio (tanα_{µ}:l_{µ}) of the tangent of the angles of inclination (α_{µ}) relative to the profile step length (l_{µ}) is identical for all of the profile steps (µ).

## Revendications

1. Pneumatique profilé pour véhicule (1), comportant dans la surface de roulement (2) des rainures (3) qui, en vue en plan, sont orientées en oblique par rapport à la direction de roulement (L) et dont les flancs (5) sont inclinés par rapport aux radiales d'un angle de pente α,
- la surface de roulement (2) étant divisée en un grand nombre (n) de pas de profil (µ) se succédant dans la direction circonférentielle, au moins deux pas de profil se suivant mutuellement (µ, µ+1) ayant des longueurs différentes, la séquence des longueurs au moins partiellement différentes (l_{µ}) des pas de profil (µ) étant désignée dans la suite par séquence de longueurs de pas de profil (l₁, l_{2,}... l_{µ},...lₙ),
- en fonction de cette séquence de longueurs de pas de profil, les dimensions positives (b_{µ}), à mesurer à l'intérieur de chaque pas de profil (µ), varient dans la direction de roulement (L) sur le pourtour, c'est-à-dire que, pour tous les pas de profil (µ), le rapport (b_{µ}/l_{µ}) entre les dimensions positives (b_{µ}) et la longueur de pas de profil (l_{µ}) est le même,
- en fonction de cette séquence de longueurs de pas de profil, les dimensions (e_{µ}) des rainures (3), à mesurer à l'intérieur de chaque pas de profil (µ), varient dans la direction de roulement (L) sur le pourtour, c'est-à-dire que, pour tous les pas de profil (µ), le rapport (e_{µ}/l_{µ}) entre les dimensions de rainure (e_{µ}) etla longueur de pas de profil (l_{µ})est le même,
pneumatique caractérisé en ce que :
- également les angles de pente α , à mesurer à l'intérieur de chaque pas de profil (µ), varient sur le pourtour, et évidemment également en conformité avec cette séquence de longueurs de pas de profil, c'est-à-dire que, pour tous les pas de profil (µ), le rapport (tgα_{µ}/l_{µ}) entre la tangente de l'angle de pente (α_{µ}) et la longueur de pas de profil (l_{µ}) est le même.
